# FASCICULE DE BREVET EUROPEEN

(11) **EP 4 164 923 B1**
(45) Date de publication et mention de la délivrance du brevet: **28.01.2026**
(21) Numéro de dépôt: 21732962.2
(22) Date de dépôt: 12.05.2021
(51) Int. Cl.: B60R 16/023, B62D 25/20

(54) **SUPPORT DE CALCULATEUR EMBARQUÉ DE VÉHICULE**
STÄNDER FÜR BORDCOMPUTER EINES FAHRZEUGS
STAND FOR ON-BOARD VEHICLE COMPUTER

(30) Priorité: 16.06.2020 FR 2006250
(43) Date de publication de la demande: 19.04.2023
(73) Titulaire: Stellantis Auto SAS, 78300 Poissy (FR)
(72) Inventeur: SEVRIN, Alexandre, 91400 ORSAY (FR); SAREH, Benchabane, 75012 PARIS (FR); CORNEFERT, Arnaud, 94240 L HAY LES ROSES (FR); PRIAN, Patrick, 77200 TORCY (FR)
(74) Mandataire: BCIP
(86) Numéro de dépôt international: PCT/FR2021/050833
(87) Numéro de publication internationale: WO 2021/255359

(56) Documents cités:
- EP-A1- 2 636 562
- EP-A1- 3 190 032
- EP-A2- 0 810 147
- WO-A1-2016/079391
- WO-A2-2019/170969
- CN-U- 202 413 692
- DE-A1- 102017 006 373
- FR-A1- 3 089 179
- US-A1- 2017 197 569
- US-B2- 8 336 657
- US-B2- 8 479 858

## Description

### Domaine technique de l'invention

La présente invention revendique la priorité de la demande française 2006250 déposée le 16 Juin 2020**.**

La présente invention concerne de manière générale un support de calculateur prévu pour recevoir un calculateur monté sur un véhicule automobile, et en particulier, la présente invention concerne un support de calculateur à souder sur un soubassement (partie inférieure d'un châssis de véhicule) pour recevoir un calculateur de mesure d'accélération, typiquement utilisé pour commander des dispositifs de sécurité pyrotechniques en cas de choc.

### État de la technique

Il est connu dans l'art antérieur des supports de calculateur pour recevoir un calculateur. En particulier, le document CN209191845 décrit un support de montage de calculateur airbag de véhicule automobile, sous forme de plaque nervurée typiquement soudée sur un tunnel de soubassement. Cependant, dans le cas d'un véhicule avec un soubassement spécifique qui pourrait présenter une raideur ou une inertie plus faible, une telle plaque peut ne pas suffire à garantir une bonne mesure des accélérations/décélérations imposées au véhicule. Il faut alors adapter les seuils ou sensibilités de mesure et/ou de déclenchement du calculateur, ce qui nécessite des références spécifiques de calculateur. Un autre support de calculateur dans l'art antérieur est décrit dans US 8 336 657 B2.

### Présentation de l'invention

Un but de la présente invention est de répondre aux inconvénients de l'art antérieur mentionnés ci-dessus et en particulier, tout d'abord, de proposer un support de calculateur qui permette de garantir une bonne mesure des accélérations/décélérations imposées au véhicule.

Pour cela un premier aspect de l'invention concerne un support de calculateur, à souder sur un soubassement de véhicule automobile, de préférence électrique, pour former un support d'un calculateur embarqué du véhicule, comprenant :
- une plaque nervurée,
- des moyens de fixation par vissage du calculateur sur le support de calculateur
caractérisé en ce que le support de calculateur comprend une traverse agencée pour être fixée sur le soubassement selon une direction transversale du véhicule, et dans lequel la plaque nervurée est soudée sur la traverse. Les moyens de fixation par vissage comprennent au moins une colonnette passant au travers de la traverse et de la plaque nervurée et comprenant un épaulement, et l'épaulement est soudé sur un premier côté de la traverse, opposé à un deuxième côté de la traverse sur lequel est soudée la plaque nervurée. Autrement dit, la traverse est prise en sandwich entre l'épaulement de colonnette et la plaque nervurée, pour garantir une bonne inertie / raideur de l'ensemble.

La traverse intégrée au support de calculateur permet d'ancrer de manière robuste la plaque nervurée et les moyens de fixation du calculateur sur le soubassement, si bien que les accélérations/décélérations imposées au véhicule sont correctement transmises au calculateur. En particulier, la traverse s'étend selon la direction transversale du véhicule et est typiquement ancrée jusqu'à proximité des bords latéraux du soubassement ce qui offre une bonne transmission de la décélération/accélération lors d'un choc latéral. L'inertie et/ou la raideur ainsi obtenues permettent de garantir des conditions de raideur / inertie similaires à un soubassement qui serait plus rigide. Un calculateur standard peut donc être utilisé.

Avantageusement, le support de calculateur comprend trois colonnettes passant au travers de la traverse et de la plaque nervurée, et la plaque nervurée comprend :
- un trou de centrage ajusté sur une première colonnette pour bloquer deux translations dans un plan perpendiculaire à une direction axiale de la première colonnette,
- un trou de positionnement ajusté sur une deuxième colonnette pour bloquer une seule translation dans le plan perpendiculaire à la direction axiale de la première colonnette,
- un trou libre ajusté sur une troisième colonnette pour laisser libre deux translations dans le plan perpendiculaire à la direction axiale de la première colonnette. Le montage avant soudage n'est pas hyperstatique, mais reste toutefois précis, avec le trou de centrage bien positionné (avec peu de jeu donc) et le trou de positionnement qui bloque une seule translation.

Avantageusement :
- la plaque présente une première épaisseur,
- la traverse présente une deuxième épaisseur, inférieure à la première épaisseur. Cette mise en œuvre permet de garantir que la traverse sera la plus légère possible.

Avantageusement :
- la première épaisseur est supérieure ou égale à 1.75 mm, de préférence supérieure ou égale à 1.95 mm,
- la deuxième épaisseur est inférieure ou égale à 1.65 mm, de préférence inférieure ou égale à 1.55 mm.

Avantageusement :
- la plaque nervurée présente une limite élastique Re au moins égale à 350MPa,
- la traverse présente une limite élastique Re au moins égale à 450MPa et/ou une limite à la rupture Rm au moins égale à 590MPa.

Avantageusement, la traverse présente une longueur supérieure ou égale à 80% d'une largeur du soubassement. Une telle mise en œuvre permet de présenter une bonne transmission des accélérations/décélérations lors d'un choc latéral ou poteau.

Avantageusement, la plaque nervurée présente des nervures de sorte à avoir une hauteur hors tout comprise entre 2 et 3 fois son épaisseur, et de préférence une hauteur hors tout supérieure à 2.5 fois son épaisseur. Un tel nervurage procure une bonne inertie / raideur tout en ne requérant pas trop d'espace.

Avantageusement, la traverse présente une ou plusieurs nervures qui ont une hauteur hors tout comprise entre 2 et 3 fois l'épaisseur de la traverse. Un tel nervurage procure une bonne inertie / raideur tout en ne requérant pas trop d'espace. Avantageusement, la ou les nervures sont orientées selon la direction longitudinale de la traverse (la direction transversale du véhicule).

Un deuxième aspect de l'invention concerne un soubassement de véhicule comprenant un support de calculateur selon le premier aspect de l'invention.

Avantageusement, le soubassement de véhicule comprend une portion de tunnel longitudinal, et la traverse présente une face avant agencée à moins de 20 mm d'une face arrière d'une pièce, par exemple un renfort de commande de vitesse, formant au moins une partie du tunnel longitudinal. La mesure d'accélération / décélération en cas de choc frontal est fiable, car la portion de tunnel est rigide selon la direction longitudinale, et la traverse est à faible distance, ou même en appui sur une pièce formant le tunnel.

Un troisième aspect de l'invention concerne un véhicule automobile, comprenant un support de calculateur selon le premier aspect de l'invention.

### Description des dessins

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue générale d'un support de calculateur selon l'invention ;
[fig. 2] représente une vue en perspective d'une plaque nervurée du support de calculateur de la figure 1;
[fig. 3] représente une vue en coupe du support de calculateur de la figure 1 ;
[fig. 4] représente une vue de dessus du support de calculateur de la figure 1 ;
[fig. 5] représente une vue du support de calculateur de la figure 1 soudé sur un soubassement de véhicule.

### Description détaillée de l'invention

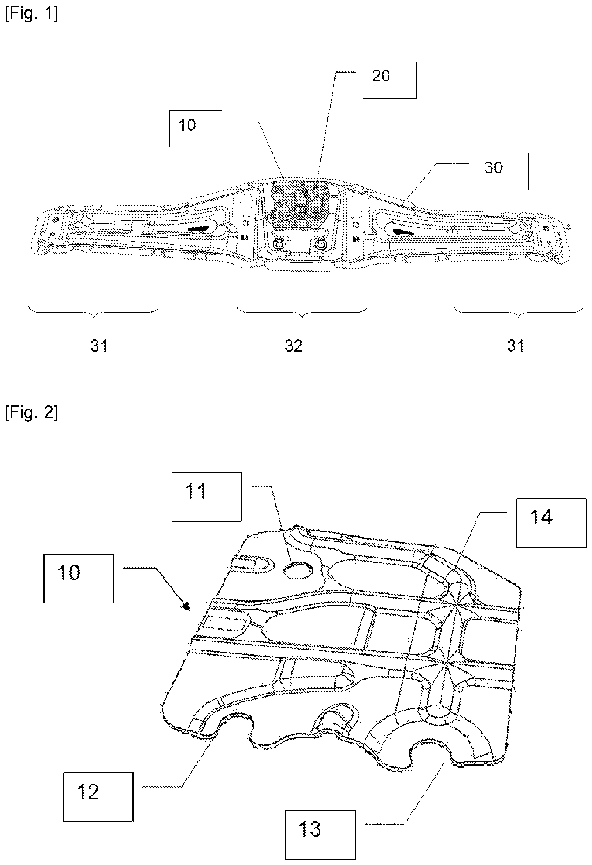

La figure 1 représente un support de calculateur comprenant une plaque nervuré 10 (hachurée pour la distinguer aisément), une traverse 30 et trois colonnettes 20. Un tel support de calculateur est destiné à être soudé sur un soubassement de véhicule, pour recevoir ensuite un calculateur de véhicule, et en particulier un calculateur d'airbag, c'est-à-dire une unité de mesure d'accélérations / décélérations appliquées au véhicule.

Afin de présenter une rigidité et une inertie adéquates, le support de calculateur comprend une traverse qui sera fixée sur le soubassement selon une direction transversale du véhicule, si bien que des parties latérales 31 de la traverse seront fixées à proximité des bords du soubassement, tandis que la plaque nervurée 10 est soudée sur une partie centrale 32 de la traverse 30.

Comme le montre la figure 2, la plaque nervurée 10 présente sur toute sa surface des nervures 14, afin de présenter une raideur importante. La plaque nervurée 10 est typiquement soudée sur la traverse 30, par exemple avec des soudures par point. On peut prévoir par exemple une pluralité de soudures par points, jusqu'à environ 10 soudures par point ou plus, pour garantir une bonne solidarisation de la traverse 30 et de la plaque nervurée 10 et ainsi un support de calculateur rigide dans sa partie centrale.

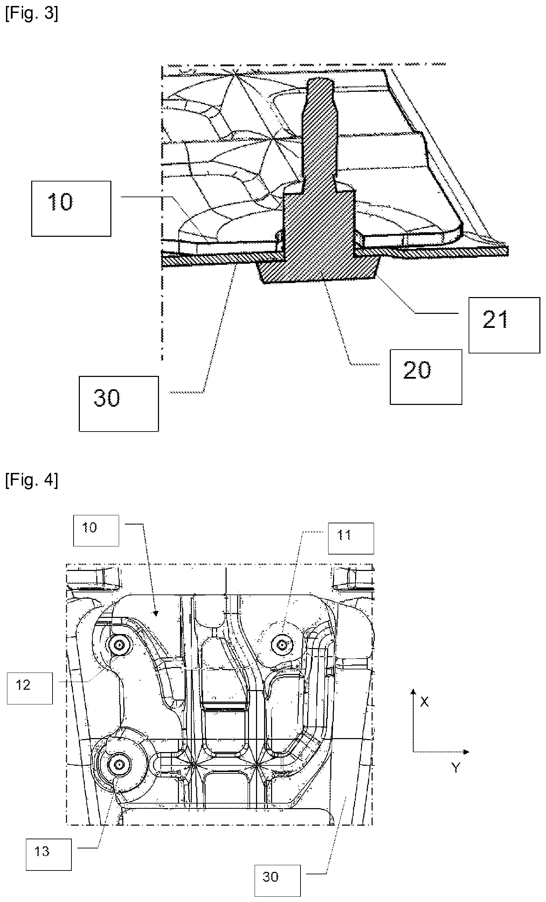

Comme le montre la figure 3, des colonnettes 20 (ici trois, mais on peut en prévoir d'autres) épaulées sont fixées (par soudure) via leur épaulement sur une face inférieure de la traverse 30, alors que la plaque nervurée 10 est soudée sur la face supérieure de la traverse 30. Les trois colonnettes ont toutes la même orientation vers le haut.

La figure 4 montre une vue de dessus de la partie centrale 32 de la traverse 30, avec la plaque nervurée 10. Afin de garantir un positionnement correct et non hyperstatique de la plaque nervurée 10, celle-ci comprend :
- un trou de centrage 11 ajusté sur une première colonnette 20 pour bloquer deux translations (X et Y ici) dans un plan perpendiculaire à une direction axiale de la première colonnette 20,
- un trou de positionnement 12 ajusté sur une deuxième colonnette 20 pour bloquer une seule translation (X ici) dans le plan perpendiculaire à la direction axiale de la première colonnette 20,
- un trou libre 13 ajusté sur une troisième colonnette 20 pour laisser libre le deux translations (X et Y) dans le plan perpendiculaire à la direction axiale de la première colonnette 20.

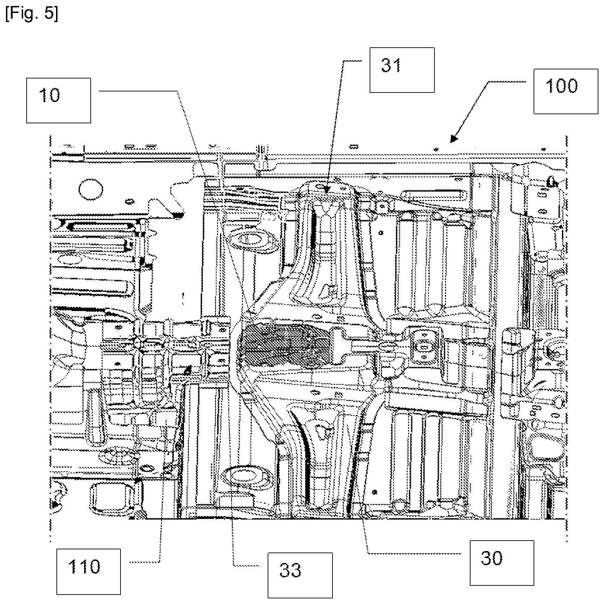

La figure 5 montre le support de calculateur soudé sur un soubassement 100. Le soubassement représenté ici est typiquement destiné à un véhicule électrique, car on peut remarquer qu'un tunnel central formé en partie par une pièce 110 (un support de commande de vitesse, même si un véhicule électrique n'a pas à proprement parler de commande de boite de vitesse), s'arrête au niveau de la traverse 30 et ne se prolonge par sur toute la longueur du soubassement 100, qui peut donc former ou recevoir un bac batterie dans sa partie centrale (en partie sous la traverse 30).

Du fait de la longueur importante de la traverse 30, les deux parties latérales 31 de la traverse 30 sont positionnées à proximité des bords latéraux du soubassement (par exemple à moins de 300 mm). Ainsi, une décélération / accélération d'un choc latéral sera correctement transmise au calculateur embarqué sur les colonnettes 20.

Enfin, on peut remarquer que la face avant de la traverse 30 est au contact ou quasiment au contact de la pièce 110 qui termine le tunnel central. Il en est pratiquement de même pour la plaque nervurée 10. En particulier, on peut prévoir un espace de moins de 50 mm et avantageusement de moins de 20 mm ou même comme ici un contact entre la pièce 110 et la traverse 30, si bien qu'une décélération / accélération d'un choc frontal sera correctement transmise au calculateur embarqué sur les colonnettes 20.

En conséquence, grâce au support de calculateur ci-dessus décrit, les mesures d'accélération / décélération lors d'un choc véhicule seront très bien effectuées par le calculateur embarqué. On peut donc prévoir les mêmes seuils de déclenchement des modules de sécurité (airbags, pré-tensionneurs de ceinture) qu'un véhicule qui aurait un tunnel central sur tout le long du soubassement, ou sans traverse.

La traverse 30 et/ou la plaque nervurée sont typiquement réalisées en tôle acier, avec un procédé de découpe / emboutissage.

Par exemple et de manière non limitative, la plaque nervurée 10 est plus épaisse que la traverse 30 et peut être en acier à haute limite élastique avec une limite élastique Re > 350 MPa, et/ou une épaisseur >1.8 mm. La traverse 30 peut être en acier à haute limite élastique avec une limite élastique Re > 450 MPa, et/ou une épaisseur >1.3 mm

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Support de calculateur, à souder sur un soubassement (100) de véhicule automobile, de préférence électrique, pour former un support d'un calculateur embarqué du véhicule, comprenant :
- une plaque nervurée (10),
- des moyens de fixation par vissage du calculateur sur le support de calculateur,
- une traverse (30) agencée pour être fixée sur le soubassement (100) selon une direction transversale du véhicule, la plaque nervurée (10) étant soudée sur la traverse (30),
**caractérisé en ce que** les moyens de fixation par vissage comprennent au moins une colonnette (20) passant au travers de la traverse (30) et de la plaque nervurée (10) et comprenant un épaulement,
dans lequel l'épaulement est soudé sur un premier côté de la traverse (30), opposé à un deuxième côté de la traverse (30) sur lequel est soudée la plaque nervurée (10).

2. Support de calculateur selon la revendication précédente, comprenant trois colonnettes (20) passant au travers de la traverse (30) et de la plaque nervurée (10), et dans lequel la plaque nervurée (10) comprend :
- un trou de centrage (11) ajusté sur une première colonnette (20) pour bloquer deux translations dans un plan perpendiculaire à une direction axiale de la première colonnette,
- un trou de positionnement (12) ajusté sur une deuxième colonnette (20) pour bloquer une seule translation dans le plan perpendiculaire à la direction axiale de la première colonnette,
- un trou libre (13) ajusté sur une troisième colonnette (20) pour laisser libre deux translations dans le plan perpendiculaire à la direction axiale de la première colonnette (20).

3. Support de calculateur selon l'une des revendications précédentes, dans lequel :
- la plaque présente une première épaisseur,
- la traverse (30) présente une deuxième épaisseur, inférieure à la première épaisseur.

4. Support de calculateur selon la revendication précédente, dans lequel
- la première épaisseur est supérieure ou égale à 1.75 mm, de préférence supérieure ou égale à 1.95 mm,
- la deuxième épaisseur est inférieure ou égale à 1.65 mm, de préférence inférieure ou égale à 1.55 mm.

5. Support de calculateur selon l'une des revendications précédentes, dans lequel la traverse (30) présente une longueur supérieure ou égale à 80% d'une largeur du soubassement (100).

6. Support de calculateur selon l'une des revendications précédentes, dans lequel la plaque nervurée (10) présente des nervures (14) de sorte à avoir une hauteur hors tout comprise entre 2 et 3 fois son épaisseur, et de préférence une hauteur hors tout supérieure à 2.5 fois son épaisseur.

7. Soubassement (100) de véhicule comprenant un support de calculateur selon l'une des revendications précédentes.

8. Soubassement (100) de véhicule selon la revendication précédente, comprenant une portion de tunnel longitudinal, dans lequel la traverse (30) présente une face avant agencée à moins de 20 mm d'une face arrière d'une pièce (110), par exemple un renfort de commande de vitesse, formant au moins une partie du tunnel longitudinal

9. Véhicule automobile, comprenant un support de calculateur selon l'une des revendications 1 à 6.

## Patentansprüche

1. Rechnerträger, der an ein Kraftfahrzeuguntergestell (100), vorzugsweise elektrisc h, zu schweißen ist, um einen Träger für einen Fahrzeugrechner zu bilden, der Folgendes umfasst:
- eine Rippenplatte (10),
- Mittel zur Befestigung des Rechners durch Verschrauben auf dem Rechnerträger,
- ein Querträger (30), der zur Befestigung am Unterbau (100) in einer Fahrzeugquerrichtung angeord net ist, wobei die Rippenplatte (10) mit dem Querträger (30) verschweißt ist,
**dadurch gekennzeichnet, dass** die Schraubbefestigungsmittel mindestens eine Säule (20) umfassen, d ie sich durch den Querträger (30) und die gerippte Platte (10) erstreckt und eine Schulter umfasst,
Dabei ist die Schulter an einer ersten Seite des Querträgers (30) gegenüber einer zweiten Seite des Q uerträgers (30) angeschweißt, an der die Rippenplatte (10) angeschweißt ist.

2. Rechnerträger nach dem vorhergehenden Anspruch, der drei Säulen (20) aufweist, die si ch durch den Querträger (30) und die Rippenplatte (10) erstrecken, und wobei die Rippenplatte (10) aufweist:
- ein Zentrierloch (11), das auf einen ersten Ständer (20) aufgesetzt ist, um zwei Translationen in eine r Ebene senkrecht zu einer axialen Richtung des ersten Ständers zu blockieren,
- ein Positionierloch (12), das an einem zweiten Ständer (20) angebracht ist, um eine einzige Verschie bung in der Ebene senkrecht zur axialen Richtung des ersten Ständers zu blockieren,
- ein freies Loch (13), das auf einen dritten Ständer (20) aufgesetzt ist, um zwei Translationen in der E bene senkrecht zur Axialrichtung des ersten Ständers (20) frei zu lassen.

3. Rechnerträger nach einem der vorhergehenden Ansprüche, bei dem:
- die Platte eine erste Dicke aufweist,
- Der Querträger (30) weist eine zweite Dicke auf, die kleiner als die erste Dicke ist.

4. Rechnerträger nach dem vorhergehenden Anspruch, wobei
- die erste Dicke beträgt mindestens 1,75 mm, vorzugsweise mindestens 1,95 mm,
- Die zweite Dicke beträgt 1,65 mm oder weniger, vorzugsweise 1,55 mm oder weniger.

5. Rechnerträger nach einem der vorhergehenden Ansprüche, bei dem der Querträger (30) eine Länge aufweist, die größer oder gleich 80% einer Breite des Untergrundes (100) ist.

6. Rechnerträger nach einem der vorhergehenden Ansprüche, bei dem die Rippenplatte (1 0) Rippen (14) aufweist, sodass sie eine Gesamthöhe zwischen dem 2- und 3-fachen ihrer Dicke und vorzugsweise eine Gesamthöhe von mehr als dem 2,5-fachen ihrer Dicke aufweist.

7. Fahrzeugunterbau (100) mit einem Rechnerträger nach einem der vorhergehenden Ansp rüche.

8. Fahrzeugunterbau (100) nach dem vorhergehenden Anspruch, umfassend einen Längstu nnelabschnitt, wobei der Querträger (30) eine Vorderseite aufweist, die weniger als 20 mm von einer Rückseite eines Teils (110), z.B. einer Geschwindigkeitssteuerverstärkung, angeordnet ist und minde stens einen Teil des Längstunnels bildet

9. Kraftfahrzeug mit einem Rechnerträger nach einem der Ansprüche 1 bis 6.

## Claims

1. Computer support, to be welded to a motor vehicle base (100), preferably an electric base, t o form a support for a computer on board the vehicle, comprising:
- a ribbed plate (10),
means for fixing the computer by screwing it onto the computer support,
cross-member (30) arranged to be fixed to the base (100) according to a transverse management of the ve hicle, the ribbed plate (10) being welded to the cross-member (30),
**characterised in that** the screw fastening means comprise at least one post (20) passing through the c ross-member (30) and the ribbed plate (10) and comprising a shoulder,
in which the shoulder is welded to a first side of the cross-member (30), opposite to a second side of the cross-member (30) to which the ribbed plate (10) is welded.

2. Computer support according to the previous claim, comprising three columns (20) passing t hrough the crosspiece (30) and the ribbed plate (10), and in which the ribbed plate (10) comprises:
centring hole (11) fitted on a first column (20) to block two translations in a drawing perpendicular to an axial management of the first column,
positioning hole (12) fitted on a second column (20) to block a single translation in the drawing perpe ndicular to the axial management of the first column,
a free hole (13) fitted on a third column (20) to leave two translations free in the drawing perpendicu lar to the axial management of the first column (20).

3. Computer medium according to one of the previous claims, in which:
the plate has a first thickness,
the crosspiece (30) has a second thickness, less than the first thickness.

4. Computer support according to the previous claim, in which
the first thickness is greater than or equal to 1.75 mm, preferably greater than or equal to 1.95 mm,
the second thickness is less than or equal to 1.65 mm, preferably less than or equal to 1.55 mm.

5. Computer support according to one of the previous claims, in which the crosspiece (30) has a length greater than or equal to 80% of a width of the base (100).

6. Computer support according to one of the previous claims, in which the ribbed plate (10) ha s ribs (14) so as to have an overall height comprised between 2 and 3 times its thickness, and prefera bly an overall height greater than 2.5 times its thickness.

7. Vehicle base (100) comprising a computer support according to one of the previous claims.

8. Vehicle base (100) according to the previous claim, comprising a longitudinal tunnel portion, in which the cross-member (30) has a front face arranged less than 20 mm from a rear face of a component (110), for ex ample a speed control reinforcement, forming at least part of the longitudinal tunnel

9. Motor vehicle, comprising a computer support according to one of Claims 1 to 6.
